# EUROPÄISCHE PATENTSCHRIFT

(11) **EP 3 623 329 B1**
(45) Veröffentlichungstag und Bekanntmachung des Hinweises auf die Patenterteilung: **30.03.2022**
(21) Anmeldenummer: 19156855.9
(22) Anmeldetag: 13.02.2019
(51) Int. Cl.: B65H 75/40, B65H 75/44, H02G 11/02

(54) **KABELTROMMEL MIT SCHRÄG GESTELLTER TROMMELACHSE**
CABLE DRUM WITH INCLINED AXIS
TAMBOUR DE CÂBLE À AXE DE TAMBOUR OBLIQUE

(30) Priorität: 11.09.2018 DE 102018122065
(43) Veröffentlichungstag der Anmeldung: 18.03.2020
(73) Patentinhaber: Hedi GmbH Elektro- und Gerätebau, 87727 Babenhausen (DE)
(72) Erfinder: DIEBOLDER, Robert, 89296 Osterberg (DE)
(74) Vertreter: Riebling, Peter

(56) Entgegenhaltungen:
- EP-A2- 1 044 918
- WO-A1-2012/147146
- DE-A1- 2 333 435
- DE-A1- 3 022 014
- DE-U- 7 300 862
- FR-A1- 2 293 390
- RU-U1- 175 598
- US-A- 4 723 568

## Beschreibung

Die Erfindung betrifft eine Kabeltrommel nach dem Oberbegriff des Patentanspruches 1. Eine Kabeltrommel mit horizontaler Trommelachse ist beispielsweise mit dem Gegenstand der WO 1996/26565 A1 oder der DE 84 36 765 U1 bekannt geworden.

Die bekannte Kabeltrommel besteht aus einem Fußgestell mit daran angeformten, oberen Tragegriff, wobei die Wickeltrommel aus zwei zueinander parallelen, zueinander einen gegenseitigen Abstand aufweisenden Trommelflanschen besteht, zwischen denen der Wickelkörper angeordnet ist. Auf den Wickelkörper und im Zwischenraum zwischen den beiden Trommelflanschen wird ein Elektrokabel oder ein anderes strangförmiges Wickelgut aufgewickelt.

Die Trommel ist einseitig in einem hinteren Lager an einer vertikal ausgerichteten Lagerplatte des Fußgestells drehbar gelagert..

Mit dem Gegenstand der DE 603 10 828 T4 ist eine weitere Kabeltrommel in der Art einer in sich geschlossenen Kabelbox bekannt geworden, bei der die Wickeltrommel im Bereich eines geschlossenen gehäuseartigen Innenraums drehbar angeordnet ist. Die Drehlagerung der Wickeltrommel ist etwa gleich wie bei der WO1996/26565A1 ausgebildet.

Der Unterschied zwischen einer Kabelbox und einer Kabeltrommel liegt darin, dass bei der Kabelbox der Wickelraum in sich abgeschlossen und die Wickeltrommel durch das umliegende Gehäuse abgedeckt ist, während bei einer Kabeltrommel der eingangs genannten Art der Wickelraum offen ist.

Ein gleicher Gegenstand ergibt sich auch mit der EP 3 316 429 A1. Auch diese Kabeltrommel ist in offener Bauweise ausgebildet und weist eine in horizontaler Richtung weisende Wickeltrommel auf, was bedeutet, dass deren Rotationsachse parallel zu einer horizontalen Linie ist, die parallel zur Aufstellebene ausgerichtet ist.

Die als nächstliegender Stand der Technik angesehene DE 73 00 862 U offenbart eine Kabeltrommel nach dem Oberbegriff des Anspruchs 1.

Nachteil bei derartigen Kabeltrommeln - gleichgültig ob in der Ausführung als Kabelbox oder als offene Kabeltrommel - ist jedoch, dass sich wegen der horizontalen Rotationsachse, die parallel zur Aufstellebene gerichtet ist, am vorderen Flansch der Wickeltrommel nur ein sehr geringer Bodenabstand zur Aufstellebene ergibt.

Wenn nun - wie aus der EP 3 316 429 A1 zu entnehmen - am vorderen Flansch noch ein Drehgriff angeordnet ist, besteht bei derartigen Kabeltrommeln der Nachteil, dass beim Drehen der Wickeltrommel mit einer Hand, die Gefahr besteht, dass die den Drehgriff umfassende Hand auf dem Erdboden aufschlägt. Dadurch besteht eine erhöhte Unfall- und Verletzungsgefahr und in der Regel behelfen sich die Benutzer derartiger Kabeltrommeln damit, dass sie während des Aufwickelvorgangs die Kabeltrommel mit der anderen Hand festhalten und gleichzeitig schräg stellen, um dadurch eine verletzungsmindernde Drehung der Wickeltrommel mit dem Drehgriff zu ermöglichen, ohne dass die drehende Hand auf dem Erdboden aufschlägt.

Nachteil der bekannten Kabeltrommeln - entweder in der offenen oder der geschlossenen Bauweise - ist, dass bei einer liegenden Kabeltrommel der Nachteil besteht, dass von oben auf die liegende Kabeltrommel einwirkende Regentropfen in den am vorderen Flansch eingebauten Steckdoseneinsatz hineinfließen, was zu gefährlichen Kurzschlüssen führen kann. Eine Wasserabflussmöglichkeit bei liegenden Kabeltrommeln im Bereich des vorderen Flansches der Wickeltrommel ist nicht bekannt und nicht vorgesehen.

Nachteil der bekannten Kabeltrommeln ist, dass wegen der horizontalen Ausrichtung der Wickeltrommel parallel zur Aufstellebene eine nur schlechte Sichtbarkeit der am vorderen Flansch nach vorne gerichteten Steckdoseneinsätze gegeben ist. Der Benutzer muss sich zum Einstecken von Steckern in die Steckdoseneinsätze auf den Boden knien oder bücken, um eine ausreichende Sicht auf die dort angeordneten Steckdoseneinsätze zu erhalten und einen Stecker lagenrichtig in einen Steckdoseneinsatz einzustecken.

Als weiterer Nachteil wird angeführt, dass wegen der horizontalen Ausrichtung der Wickeltrommel mit paralleler Ausrichtung der Rotationsachse zur Ebene des Aufstellortes auch eine schlechte Gewichtsverteilung gegeben ist.

Nachdem in den meisten Fällen die Wickeltrommel einseitig an ihrem hinteren Flansch auf einem zugeordneten Drehlager an einem nur eine einseitige Abstützung bietenden Fußgestell gelagert ist, besteht deshalb der Nachteil, dass insbesondere hoch bewickelte Wickeltrommeln zum Umfallen nach vorne neigen oder nicht auf schrägen Ebenen aufgestellt werden können, weil dann eine ungünstige Gewichtsverlagerung in Richtung auf den vorderen Flansch der Wickeltrommel und die dort angeordneten Steckdoseneinsätzen erfolgt, was dazu führen kann, dass die Kabeltrommel nach vorne umkippt.

Schließlich besteht ein weiterer Nachteil darin, dass wegen der horizontalen Ausrichtung der bekannten Wickeltrommeln auch der Verschleiß auf das einseitige Drehlager zwischen dem Fußgestell und der Wickeltrommel relativ groß ist. Wegen der ungünstigen, einseitigen Gewichtsverteilung wirken die Lagerkräfte vorwiegend im vorderen Bereich des Drehlagers. Dort ist aber nur eine geringe Abstützung gegeben. Aus diesem Grund ist die Lebensdauer der Lager bei den bekannten Kabeltrommeln begrenzt.

Der Erfindung liegt deshalb die Aufgabe zugrunde, eine Kabeltrommel nach dem Gegenstand der EP 3 316 429 A1 oder der DE 603 10 828 T4 oder der DE 73 00 862 U so weiterzubilden, dass die Verletzungsgefahr beim Drehen der Wickeltrommel verringert wird, dass Verschleiß des Drehlagers minimiert wird und das die Kabeltrommel mit geringerer Verletzungsgefahr betriebssicher bedient werden kann.

Zur Lösung der gestellten Aufgabe ist die Erfindung durch die technische Lehre des Anspruches 1 gekennzeichnet.

Bevorzugtes Merkmal der Erfindung ist, dass die Unfallgefahr bei Betätigung der Wickeltrommel mit dem am vorderen Flansch der Wickeltrommel angeordneten Drehgriff dadurch vermindert wird, dass die Wickeltrommel auf einer im Winkel schräg zur Horizontalen aufwärts geneigten Trommelachse drehbar gelagert ist.

Durch diese Schrägstellung der Wickeltrommel wird es erstmals möglich, dass der vordere Trommelflansch der Wickeltrommel mit dem dort angeordneten Drehgriff einen vergrößerten Bodenabstand zur Aufstellebene erhält. Damit wird vermieden, dass beim Drehen der Wickeltrommel durch Anfassen an dem am vorderen Bereich angeordneten Drehgriff nicht mehr die Gefahr besteht, dass die drehende Hand auf dem Erdboden aufschlägt.

Weiterer Vorteil der Erfindung ist, dass aufgrund der schräg gestellten Trommelachse eine verbesserte Sicht auf den im vorderen Flanschbereich der Wickeltrommel angeordneten Steckdoseneinsatz gegeben ist, weil insgesamt der vordere Flansch der Wickeltrommel schräg zur Vertikalen geneigt ist.

Insgesamt wird es bevorzugt, wenn der Winkel der Rotationsachse der Wickeltrommel im Vergleich zu einer horizontalen Linie im Winkelbereich von 3 bis 10° liegt. Eine Winkelstellung von 7° wird bevorzugt.

Ein weiterer Vorteil, der sich durch die schräg gestellte Trommelachse ergibt, ist der, dass der Schwerpunkt der Wickeltrommel nach hinten in Richtung auf das an der Lagerplatte des Fußgestells angeordnete Drehlager verlagert wird, wodurch die Last auf das Drehlager besser verteilt wird. Somit wird das Drehlager nicht mehr im vorderen Bereich belastet, wie es bei horizontal drehend gelagerten Wickeltrommeln der Fall ist, sondern die Lagerlast wird mehr nach hinten verschoben und gleichmäßiger auf das Lager verteilt, so dass ein geringerer Verschleiß bei längerer Lebensdauer gewährleistet ist.

Ein weiterer Vorteil einer schräg gestellten Trommelachse mit einer schräg gestellten Wickeltrommel ist der, dass wenn die Kabeltrommel umgelegt wird und das Fußgestell auf der Aufstellebene liegt, nun durch eine besondere Ausbildung des Fußgestells in Verbindung mit der schräg gestellten Trommelachse dafür gesorgt wird, dass der die Steckdoseneinsätze tragende vordere Trommelflansch der Wickeltrommel nun schräg zu einer horizontalen Ebene (Aufstellebene) gerichtet ist, was dazu führt, dass eventuell auf den vorderen Trommelflansch einwirkende Regentropfen nun auf einen schräg zur Horizontalen gerichteten Trommelflansch treffen, wo sie durch geeignete Abflussöffnungen abfließen können und nicht mehr in die Steckdoseneinsätze eindringen können. Somit werden zusätzliche Vorteile der schräg gestellten Trommelachse in Verbindung mit konstruktiven Maßnahmen am Fußgestell auch bei einer auf einer Aufstellebene liegenden Kabeltrommel erreicht.

In einer bevorzugten Ausgestaltung der Erfindung ist es bei allen Ausführungsformen vorgesehen, dass die Neigung der hinteren Lagerplatte des Fußgestells zur Vertikalen etwa der Neigung der Wickeltrommel zur Vertikalen entspricht.

Dies bedeutet, dass die beiden Trommelflansche der Wickeltrommel etwa parallel zu der hinteren Lagerplatte des Fußgestells gerichtet sind, was wiederum bedeutet, dass die hintere Lagerplatte des Fußgestells schräg zur Vertikalen geneigt ist.

Vorstehend wurde angegeben, dass ein Neigungswinkel vorzugsweise im Bereich von 7° vorgesehen ist. Es sind selbstverständlich alle Neigungswinkel möglich, die in dem vorher genannten bevorzugten Bereich liegen.

Demnach liegen die Flansche der Wickeltrommel annähernd parallel zur Ebene der hinteren Lagerplatte des Fußgestells, wodurch eine besondere dichte Anlage des hinteren Trommelflansches der Wickeltrommel an der Lagerplatte des Fußgestells möglich ist.

Selbstverständlich ist es möglich, dass sich die Neigung der Flansche der Wickeltrommel um einige Winkelgrade von der Neigung der Ebene der Lagerplatte des Fußgestells abweicht, wodurch sich dann ein konischer Zwischenraum zwischen der Ebene des hinteren Trommelflanschs und der Lagerplatte des Fußgestells ergeben würde.

Im Folgenden wird die Erfindung anhand von lediglich einen Ausführungsweg darstellenden Zeichnungen näher erläutert.

Es zeigen:
- Figur 1:: perspektivische Ansicht einer Kabeltrommel nach der Erfindung
- Figur 2:: die gleiche Darstellung wie Figur 1 von der Rückseite her gesehen
- Figur 3:: eine Kabeltrommel, die auf einer Aufstellebene liegt
- Figur 4:: die Kabeltrommel nach den Figuren 1 bis 3 in Seitenansicht
- Figur 5:: die Seitenansicht des Fußgestells
- Figur 6:: die Stirnansicht der Kabeltrommel
- Figur 7:: eine perspektivische Ansicht der Kabeltrommel in unbewickeltem Zustand
- Figur 8:: eine Seitenansicht der Kabeltrommel nach Figur 7 in unbewickeltem Zustand
- Figur 9:: die Kabeltrommel mit ausgeklapptem Drehgriff

Die Figuren zeigen allgemein eine Kabeltrommel 1 der ersten Bauart, wie sie im allgemeinen Teil beschrieben wurde. Die folgende Beschreibung gilt in analoger Weise auch für Kabelboxen, deren Wickeltrommel in einem geschlossenen Gehäuse angeordnet ist.

Die Kabeltrommel 1 besteht im Wesentlichen aus einem Fußgestell 2, an dem im hinteren Ende ein nach vorn gerichtetes Drehlager für eine darauf drehbar gelagerte Wickeltrommel 10 angeordnet ist.

Das Fußgestell 2 besteht aus einem oberen, nach vorne gerichteten Tragegriff 3, an dessen unterem Ende ein Kabelhalterbügel 4 angeordnet ist.

Durch den Kabelhalterbügel 4 wird das Elektrokabel 20 mit einem daran angeordneten Stecker geführt, mit dem Ziel, dass das Elektrokabel 20 nicht über die die beiden im Abstand zueinander angeordneten Trommelflansche 11, 12 der Wickeltrommel 10 hinaus gerät.

Es handelt sich um eine Kabelführung, die insbesondere beim Aufwickeln oder Abwickeln der Wickeltrommel 10 dafür sorgt, dass das Elektrokabel 20 auf dem Wickelraum der Wickeltrommel 10 gehalten wird. Ein solcher Kabelhalterbügel 4 kann jedoch auch entfallen.

Das Fußgestell 2 besteht aus zwei vorderen Standbeinen 5, 6, die etwa parallel nach vorne einseitig offen in einer U-Form ausgerichtet sind und zwischen sich einen Zwischenraum 7 bilden.

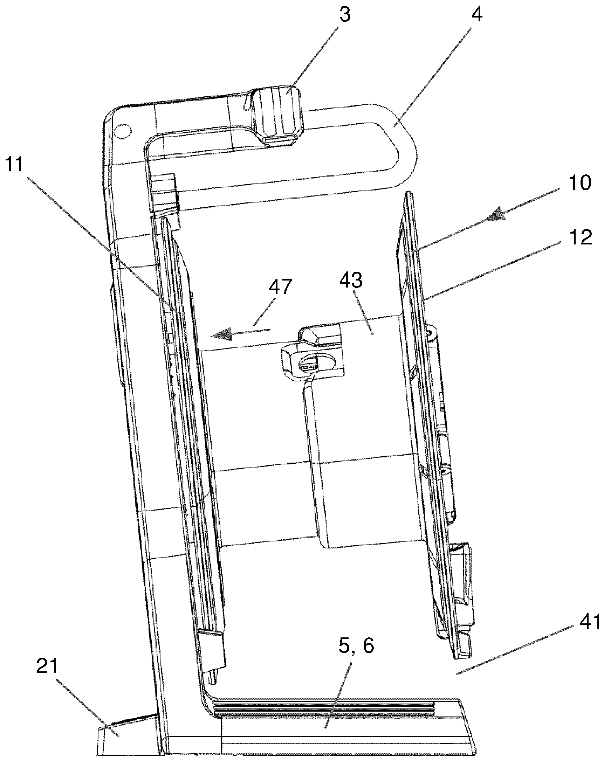

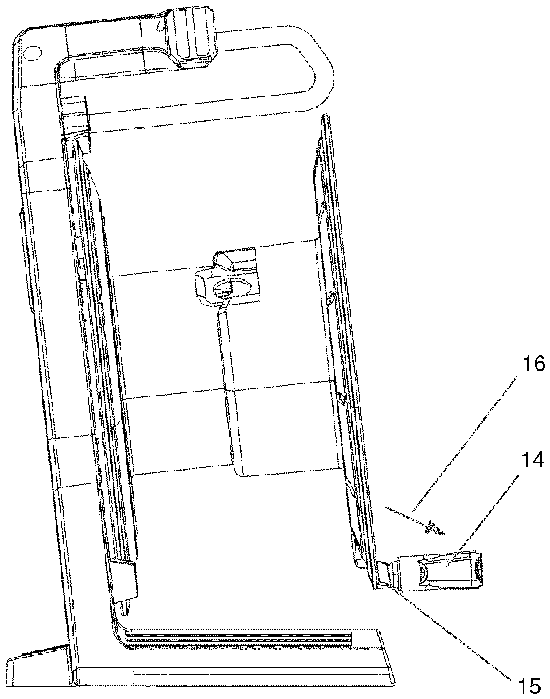

Die Wickeltrommel 10 besteht aus den beiden zueinander parallelen Trommelflanschen 11, 12 die vorzugsweise werkstoffeinstückig über einen im Durchmesser verminderten Wickelkörper 43 (siehe Figur 8 und 9) drehfest miteinander verbunden sind. Im vorderen Trommelflansch 12 ist ein ringförmiger Steckdoseneinsatz 13 mit beispielsweise vier verteilt angeordneten Steckdosen angeordnet.

Drehfest mit dem vorderen Trommelflansch 12 ist am radial äußeren Ende des Trommelflansches 12 ein Drehgriff 14 angeordnet, der im gezeigten Ausführungsbeispiel als Klappgriff ausgebildet ist und der in einem Schwenklager 15 in Pfeilrichtung 16 herausschwenkbar und in Gegenrichtung hierzu einschwenkbar ist.

In anderen, nicht dargestellten Ausführungen kann der Drehgriff 14 auch fest und nicht herausschwenkbar von der Ebene des vorderen Trommelflansches 12 abstehen.

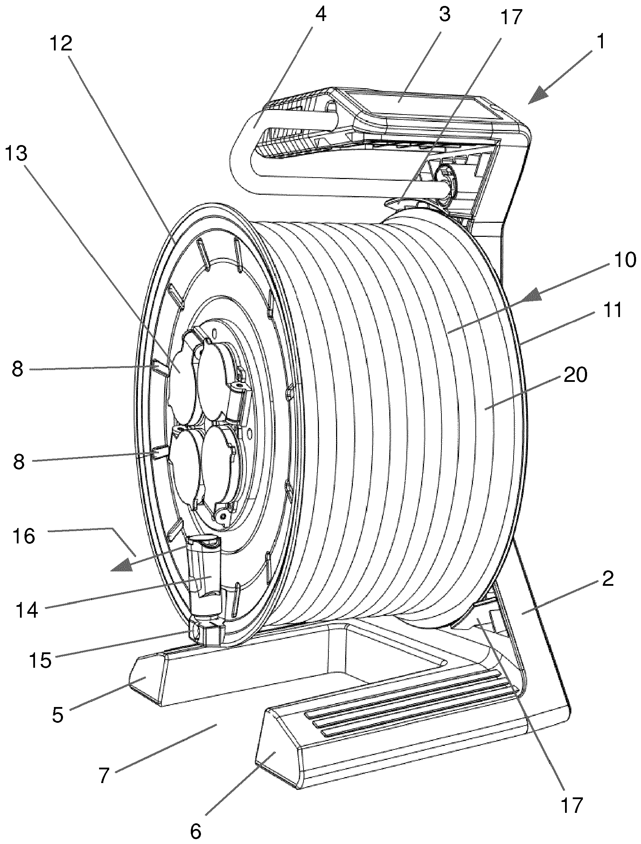

Die Figur 1 zeigt auch noch, dass am Fußgestell 2 obere und untere Schmutzabweiser 17 vorgesehen sind, die den hinteren Trommelflansch 11 übergreifen, um ein Eindringen von Schmutz und Wasser in das im Bereich des hinteren Trommelflansches angeordnete Drehlager zu vermeiden.

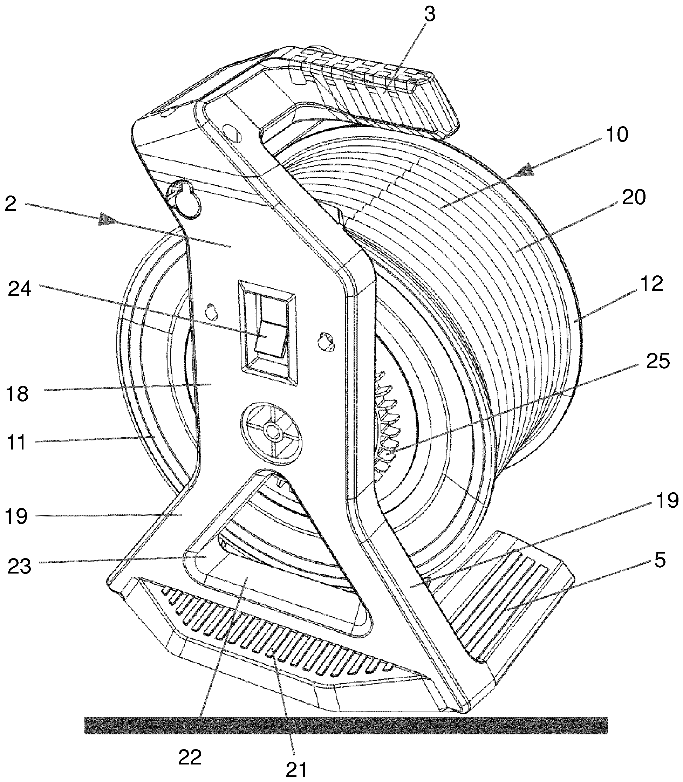

Aus der Figur 2 gehen weitere Einzelheiten des Fußgestells 2 hervor. Dieses besteht im Wesentlichen aus einer Lagerplatte 18, an der zwei Y-förmige Streben 19 angeformt sind, die in ihrem unteren Bereich einen dreiecksförmigen Ausschnitt 23 erzeugen, dessen untere Begrenzung durch eine Querstrebe 22 gebildet ist.

Das gesamte Fußgestell 2 besteht bevorzugt aus einem, in einem einzigen Spritzgussvorgang hergestellten Kunststoffkörper. Es kann dementsprechend auch der Tragegriff 3 werkstoffeinstückig an die Lagerplatte 18 angeformt sein.

In einer anderen Ausgestaltung kann es vorgesehen sein, dass der Tragegriff 3 über geeignete Schrauben mit der Lagerplatte 18 verbunden ist.

Im mittigen Bereich der Lagerplatte 18 ist eine Bremstaste 24 angeordnet, bei deren Betätigung ein Bremseingriff in einen Bremskranz 25 erfolgt, der drehfest mit dem hinteren Trommelflansch 11 der Wickeltrommel 10 verbunden ist.

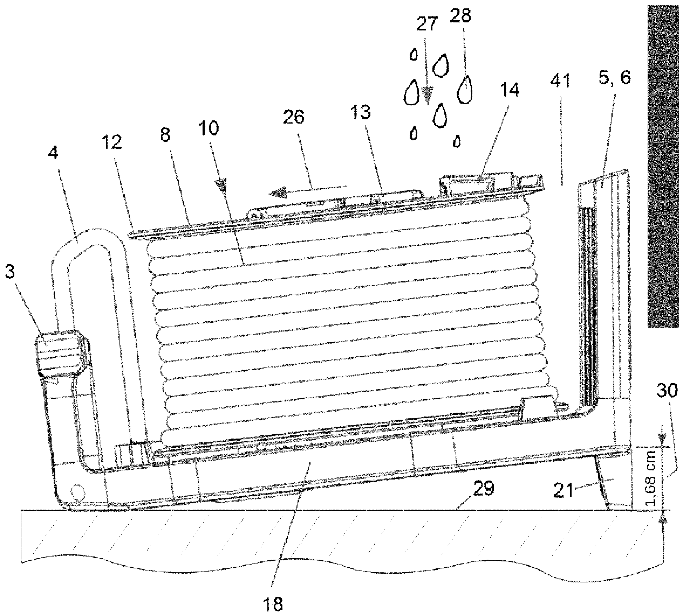

Der untere Teil des Fußgestells 2 wird durch eine Fußauflage 21 gebildet, die etwa horizontal gerichtet und plattenförmig ausgebildet ist, wobei die Fußauflage 21 die beiden Standbeine 5, 6 im hinteren Bereich verbindet und die Fußauflage 21 die hintere Lagerplatte 18 um einen Abstand 30 überragt, wie dies in Figur 3 dargestellt ist.

Der Abstand 30 sorgt dafür, dass gemäß Figur 3 bei liegender Kabeltrommel 1 die Fußauflage 21 auf einer (horizontalen) Aufstellebene 29 aufliegt und damit für eine Schrägstellung der Lagerplatte 18 und der darauf drehbar gelagerten Wickeltrommel 10 gesorgt ist.

Damit wird sichergestellt, dass der vordere Trommelflansch 12 eine schräg gestellte Ablaufebene bildet und die in Pfeilrichtung 27 auf den vorderen Trommelflansch 12 herabtropfenden Regentropfen 28 nunmehr schräg in Pfeilrichtung 26 über den Trommelflansch 12 laufen und aus geeigneten, radial am Umfang verteilt angeordneten Abflussöffnungen 8 auslaufen. Damit wird vermieden, dass die Regentropfen 28 in den Steckdoseneinsatz 13 und in die dort angeordneten Steckdosen gelangen. Somit bietet die schräg gestellte Trommelachse der Wickeltrommel auch bei liegender Kabeltrommel besondere Vorteile.

Aus Figur 3 ergibt sich auch der besondere Freiraum 41, der durch die geneigte Achse der Wickeltrommel 10 erreicht wird.

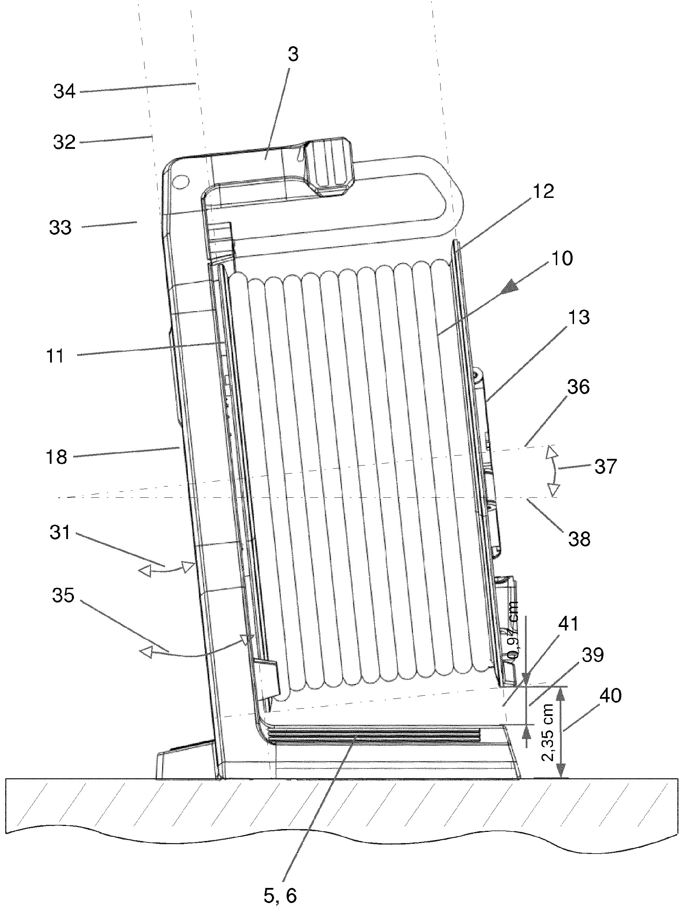

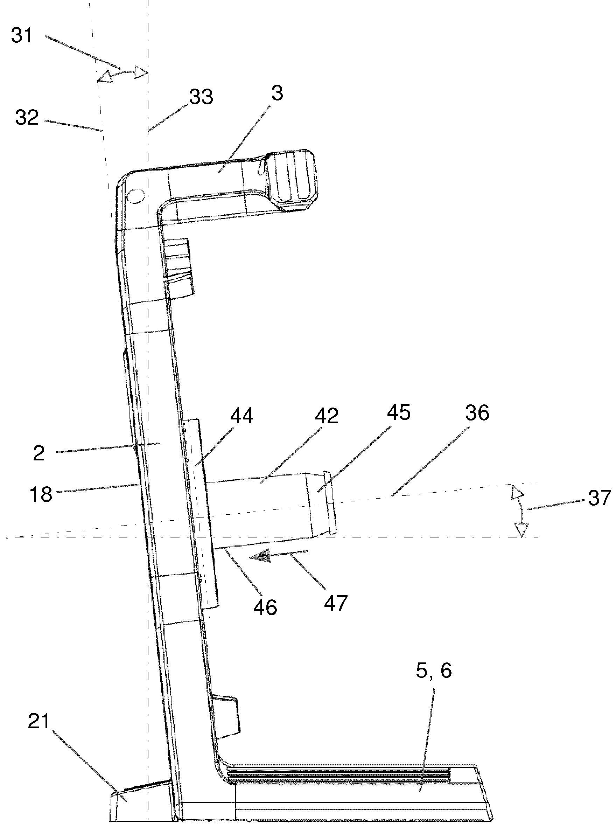

Die Figuren 4 und 5 zeigen die erfindungsgemäße Schrägstellung der Wickeltrommel 10 durch Angabe der einzelnen Winkelabweichungen von der Vertikalen 33 und der Horizontalen 38. Die genannten Orientierungslinien 33 und 38 beziehen sich auf eine in horizontaler Richtung ausgerichteten Aufstellebene 29.

Aus Figur 4 und Figur 5 ist entnehmbar, dass die Lagerplattenebene 32 einen Neigungswinkel 31 zur Vertikalen 33 aufweist, wobei der Winkel - wie vorher beschrieben - vorzugsweise etwa 7° beträgt.

Ferner wird es bevorzugt, wenn auch die Rotationsachse 36 der Wickeltrommel 10 einen Neigungswinkel 37 zur Horizontalen 38 aufweist, womit gesorgt wird, dass die beiden zueinander parallelen Trommelflansche 11, 12 etwa den gleichen Neigungswinkel 35 haben, wie der vorher erwähnte Neigungswinkel 31 der Lagerplatte. Die beiden Gegenstände (Wickeltrommel mit Trommelflanschen 11 und 12 sowie die Lagerplatte 18) sind dementsprechend vorzugsweise annähernd parallel zueinander ausgerichtet.

In Figur 4 ist die Trommelflanschebene 34 des Trommelflansches 11 eingezeichnet, und er weist etwa den gleichen Neigungswinkel 35 zur Vertikalen 33 auf als vergleichsweise der vorher erwähnte Neigungswinkel 31 der Lagerplatte 18 zur Vertikalen 33. Dementsprechend beträgt der Neigungswinkel 37 der Wickeltrommel etwa 83° zur Vertikalen 33.

Aus Figur 4 und Figur 5 ist auch entnehmbar, dass ein entscheidender Freiraum 41 durch die Schrägstellung der Wickeltrommel 10 mit ihrer schräg gestellten Rotationsachse 36 erreicht wird, denn es wird nun ein vergrößerter Abstand 39 zwischen dem Außenumfang des vorderen Trommelflansches 12 und dem Standbein 5, 6 erzielt, und darüber hinaus wird vor allem der Bodenabstand 40 der Wickeltrommel 10 durch deren Schrägstellung entscheidend vergrößert.

Wenn bisher Bodenabstände bei bekannten Kabeltrommeln im Bereich von etwa 2 bis 4 cm zur Aufstellebene 29 möglich waren, sieht die Erfindung jetzt eine Verdoppelung dieses Bodenabstandes durch die Ausbildung des vergrößerten Bodenabstandes 40 vor. Es wird demnach eine entscheidende Verminderung der Verletzungsgefahr bei gleichzeitig verbesserter Bedienung der Wickeltrommel 10 durch den vergrößerten Freiraum 41 erzielt. Durch die Schrägstellung wird auch die Bedienbarkeit der Steckdoseneinsätze 13 verbessert.

Die Figur 5 zeigt die Vorteile in Bezug auf die Verbesserung der Verschleißfreiheit des einseitigen Drehlagers. Die Wickeltrommel 10 ist auf der schräg gestellten Trommelachse 42 frei drehbar gelagert. Am Nabenlager der Wickeltrommel 10 sind im vorderen Bereich Rasthaken angeordnet, die hinter eine zugeordnete Rastnut 45 auf der Stirnseite der Trommelachse 42 einrasten, um so das Drehlager zu bilden.

Daraus ergibt sich, dass bei schräg gestellter Rotationsachse 36 und bedingt durch die Gewichtsverlagerung der Wickeltrommel 10, sich die Lagerfläche 46 auf der Trommelachse 42 in Pfeilrichtung 47 auf eine im hinteren Bereich des Drehlagers angeordnete Anschlagfläche 44 verschiebt, wodurch insgesamt die Lagerbelastung mehr in den hinteren Bereich der Lagerfläche 46 und in den Bereich der Anschlagfläche 44 verlagert wird, was bei einer gerade ausgerichteten Wickeltrommel nicht möglich war. Dort war der Verschleiß auf der Trommelachse mehr in Richtung auf das vordere Ende der Trommelachse 42 verlagert. Nunmehr ist die Lagerlast in Pfeilrichtung 47 nach hinten in Richtung auf die Anschlagfläche 44 verschoben, wodurch eine bessere und verschleißfreiere Abstützung gewährleistet ist. Damit wird der Verschleiß auf der Trommelachse 42 vermindert.

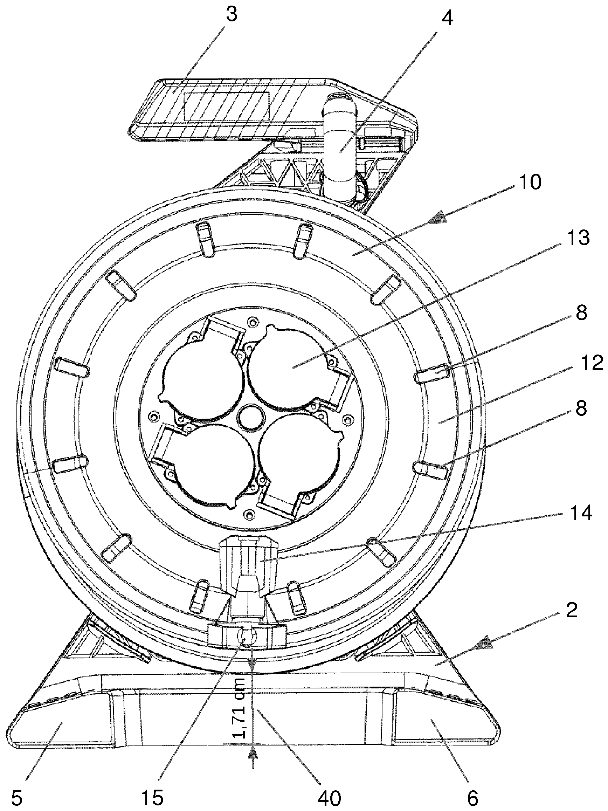

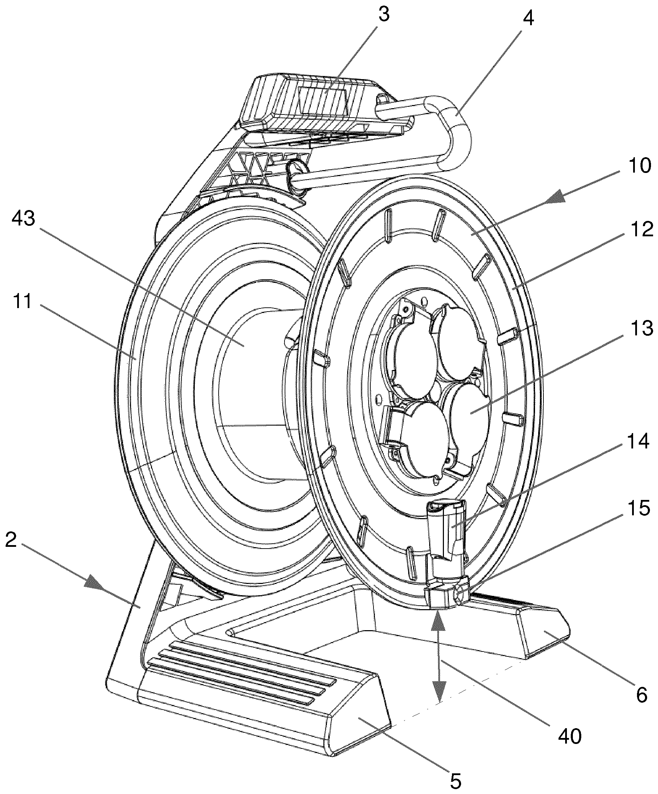

Die Figuren 6 und 7 zeigen, dass damit auch der Wickelkörper 43 zwischen den Trommelflanschen 11, 12 der Wickeltrommel 10 eine Neigung zur Horizontalen aufweist, so dass auch bei einer stehenden Kabeltrommel dafür gesorgt wird, dass sich im Bereich des hinteren Trommelflansches 11 schwerkraftbedingt mehr Elektrokabel oder Wickelgut ansammelt wie vergleichsweise im Bereich des vorderen Trommelflansches 12.

Auch bei gleichmäßiger Gewichtsbelastung wird somit - aufgrund der Schrägstellung der Wickeltrommel - ohnedies der Schwerpunkt mehr in Pfeilrichtung 47 auf die hintere Anschlagfläche 44 verlagert, wodurch die Kabeltrommel 1 insgesamt stabiler auf dem Fußgestell 2 steht und gegen Umfallen besser gesichert ist.

Die Figuren 6 und 7 zeigen die unbewickelte Wickeltrommel 10 mit dem zwischen den Trommelflanschen 11, 12 angeordneten Wickelkörper, der in beliebiger Weise rotationssymmetrisch ausgebildet sein kann.

Auch aus den Figuren 6 und 7 ist die entscheidende Verbesserung des Bodenabstandes 40 erkennbar, so dass die Unfallgefahr, wenn der ausgeklappte Drehgriff 14 mit der Hand angefasst wird, entscheidend vermindert ist.

Es besteht dann nicht mehr die Gefahr, dass die Hand entweder an den Standbeinen 5, 6 anstößt oder sogar auf der Aufstellebene 29 aufschlägt.

### Zeichnungslegende

- 1: Kabeltrommel
- 2: Fußgestell
- 3: Tragegriff
- 4: Kabelhalterbügel
- 5: Standbein
- 6: Standbein
- 7: Zwischenraum
- 8: Abflussöffnung
- 9 10: Wickeltrommel
- 11: Trommelflansch (hinten)
- 12: Trommelflansch (vorn)
- 13: Steckdoseneinsatz
- 14: Drehgriff
- 15: Schwenklager
- 16: Pfeilrichtung
- 17: Schmutzabweiser
- 18: Lagerplatte (hinten)
- 19: Strebe
- 20: Elektrokabel
- 21: Fußauflage
- 22: Querstrebe
- 23: Ausschnitt
- 24: Bremstaste
- 25: Bremskranz
- 26: Pfeilrichtung
- 27: Pfeilrichtung
- 28: Regentropfen
- 29: Aufstellebene
- 30: Abstand
- 31: Neigungswinkel (von 18)
- 32: Lagerplatten-Ebene
- 33: Vertikale
- 34: Trommelflansch-Ebene
- 35: Neigungswinkel (von 11, 12)
- 36: Rotationsachse
- 37: Neigungswinkel (von 10)
- 38: Horizontale
- 39: Abstand (von 12)
- 40: Bodenabstand (von 12)
- 41: Freiraum (von 12)
- 42: Trommelachse
- 43: Wickel körper
- 44: Anschlagfläche
- 45: Rastnut
- 46: Lagerfläche
- 47: Pfeilrichtung

## Patentansprüche

1. Kabeltrommel (1) zur Aufwicklung eines Elektrokabels zwischen den Trommelflanschen (11, 12) einer Wickeltrommel (10), an deren vorderen Trommelflansch (12) ein oder mehrere Steckdoseneinsätze (13) für das Einstecken von elektrischen Steckern angeordnet sind, wobei die Wickeltrommel (10) mit einem Drehlager (42, 44, 45) drehbar an einer Lagerplatte (18) gelagert ist, die mit einem Fußgestell (2) verbunden ist, das ein oder mehrere Standbeine (5, 6) aufweist, wobei die Wickeltrommel (10) auf einer im Winkel (37) schräg zur Horizontalen (38) aufwärts geneigten Trommelachse (42) drehbar gelagert ist, sodass der vordere Trommelflansch (12) der Wickeltrommel (10) mit dem dort angeordneten Drehgriff (14) einen vergrößerten Bodenabstand zur Aufstellebene aufweist, **dadurch gekennzeichnet, dass** auch bei einer auf einer Aufstellebene (29) liegend mit dem Fußgestell (2) aufliegenden Kabeltrommel (1) eine Schrägstellung der Flansche (11, 12) der Wickeltrommel (10) vorhanden ist.

2. Kabeltrommel nach Anspruch 1, **dadurch gekennzeichnet, dass** der Winkel (37) der schräg zur Horizontalen (38) aufwärts geneigten Trommelachse (42) im Bereich zwischen 3 bis 10° liegt und vorzugsweise 7° beträgt.

3. Kabeltrommel nach Anspruch 1 oder 2, **dadurch gekennzeichnet, dass** die Ebene der beiden Trommelflansche (11, 12) der Wickeltrommel (10) annähernd parallel zur Ebene der Lagerplatte (18) des Fußgestells (2) ist.

4. Kabeltrommel nach Anspruch 3, **dadurch gekennzeichnet, dass** auch die Ebene der Lagerplatte (18) des Fußgestells (2) etwa gleich schräg wie die Ebene der Trommelflansche (11, 12) der Wickeltrommel (10) ist.

5. Kabeltrommel nach einem der Ansprüche 1 bis 4, **dadurch gekennzeichnet, dass** an der Rückseite der Lagerplatte (18) des Fußgestells (2) ein verlängerter Ansatz einer Fußauflage (21) angeordnet ist, der sich auf der Aufstellebene (29) bei liegender Kabeltrommel abstützt und die Ebene der Lagerplatte (18) schräg zur Aufstellebene (29) ausrichtet.

6. Kabeltrommel nach Anspruch 5, **dadurch gekennzeichnet, dass** das Fußgestell (2) aus zwei vorderen Standbeinen (5, 6) besteht, die ausgehend von der Lagerplatte (18) nach vorne ausgerichtet sind und dass die zwei vorderen Standbeine (5,6) nach vorne einseitig offen in einer U-Form ausgerichtete sind und zwischen sich einen Zwischenraum (7) bilden.

7. Kabeltrommel nach einem der Ansprüche 1 bis 6, **dadurch gekennzeichnet, dass** mindestens im Bereich des vorderen Trommelflansches (12) der Wickeltrommel (10) am Umfang verteilte, den Flansch durchbrechende Abflussöffnungen (8) angeordnet sind.

8. Kabeltrommel nach einem der Ansprüche 1 bis 7, **dadurch gekennzeichnet, dass** der durch die Schrägstellung der Wickeltrommel (10) erzeugte Freiraum (41) zwischen dem Umfang des vorderen Trommelflansches (12) und der Aufstellebene (29) im Bereich zwischen 5 bis 8 cm liegt.

9. Kabeltrommel nach einem der Ansprüche 1 bis 8, **dadurch gekennzeichnet, dass** die Lagerlast des Drehlagers (42, 44, 45) für die Drehlagerung der Wickeltrommel (10) in Richtung (47) auf eine nächst der hinteren Lagerplatte (18) angeordnete Anschlagfläche (44) verlagert ist.

10. Kabeltrommel nach einem der Ansprüche 1 bis 9, **dadurch gekennzeichnet, dass** auch der zwischen den Trommelflanschen (11, 12) der Wickeltrommel (10) angeordnete Wickelkörper (43) die gleich Schrägstellung wie die Wickeltrommel (10) aufweist.

11. Kabeltrommel nach einem der Ansprüche 5 bis 10, **dadurch gekennzeichnet, dass** die Fußauflage (21) die beiden Standbeine (5, 6) im hinteren Bereich der Lagerplatte (18) verbindet und die die Lagerplatte (18) um einen Abstand (3) überragt.

12. Kabeltrommel nach einem der Ansprüche 1 bis 11, **dadurch gekennzeichnet, dass** der Trommelflansch (12) radial am Umfang verteilt angeordnete Abflussöffnungen (8) aufweist.

13. Kabeltrommel nach einem der Ansprüche 1 bis 12, **dadurch gekennzeichnet, dass** bei umgelegter Kabeltrommel (1) und bei dem auf der Aufstellebene (29) aufliegenden Fußgestell (2), aufgrund der schräg gestellten Trommelachse (42), der die Steckdoseneinsätze (13) tragende vordere Trommelflansch (12) der Wickeltrommel (10) schräg zu einer horizontalen Ebene (Aufstellebene) gerichtet ist, sodass auf den schräg zur Horizontalen gerichteten Trommelflansch (12) einwirkende Regentropfen durch geeignete Abflussöffnungen im Trommelflansch (12) abfließen.

## Claims

1. Cable drum (1) for winding an electric cable between the drum flanges (11, 12) of a winding drum (10), on the front drum flange (12) of which one or more plug socket inserts (13) are arranged for plugging-in of electric plugs, wherein the winding drum (10) with a pivot bearing (42, 44, 45) is mounted rotatably on a bearing plate (18) which is connected to a base frame (2) having one or more mainstays (5, 6), wherein the winding drum (10) is mounted rotatably on a drum axis (42) inclined upwards at the angle (37) obliquely to the horizontal (38) so that the front drum flange (12) of the winding drum (10) with the control grip (14) arranged there has an increased floor distance from the assembly plane, **characterised in that** an inclined position of the flanges (11, 12) of the winding drum (10) is present even when a cable drum (1) is resting with the base frame (2) lying on an assembly plane (29).

2. Cable drum according to claim 1, **characterised in that** the angle (37) of the drum axis (42) inclined upwards obliquely to the horizontal (38) lies in the range between 3 to 10° and is preferably 7°.

3. Cable drum according to claim 1 or 2, **characterised in that** the plane of the two drum flanges (11, 12) of the winding drum (10) is approximately parallel to the plane of the bearing plate (18) of the base frame (2).

4. Cable drum according to claim 3, **characterised in that** also the plane of the bearing plate (18) of the base frame (2) is approximately at the same angle as the plane of the drum flanges (11, 12) of the winding drum (10).

5. Cable drum according to one of claims 1 to 4, **characterised in that** an extended projection of a base support (21), which is supported on the assembly plane (29) when the cable drum is lying and aligns the plane of the bearing plate (18) obliquely to the assembly plane (29), is arranged on the rear side of the bearing plate (18) of the base frame (2).

6. Cable drum according to claim 5, **characterised in that** the base frame (2) consists of two front mainstays (5, 6) which are aligned to the front starting from the bearing plate (18) and **in that** the two front mainstays (5, 6) are aligned to the front open on one side in a U shape and form between them a gap (7).

7. Cable drum according to one of claims 1 to 6, **characterised in that** discharge openings (8) distributed on the circumference and penetrating the flange are arranged at least in the region of the front drum flange (12) of the winding drum (10).

8. Cable drum according to one of claims 1 to 7, **characterised in that** the free space (41) generated by the inclined position of the winding drum (10) between the circumference of the front drum flange (12) and the assembly plane (29) lies in the range between 5 to 8 cm.

9. Cable drum according to one of claims 1 to 8, **characterised in that** the bearing load of the pivot bearing (42, 44, 45) for rotary mounting of the winding drum (10) is moved in direction (47) to a stop surface (44) arranged next to the rear bearing plate (18).

10. Cable drum according to one of claims 1 to 9, **characterised in that** the winding body (43) arranged between the drum flanges (11, 12) of the winding drum (10) also has the same inclined position as the winding drum (10).

11. Cable drum according to one of claims 5 to 10, **characterised in that** the base support (21) connects the two mainstays (5, 6) in the rear region of the bearing plate (18) and which projects beyond the bearing plate (18) by a distance (3).

12. Cable drum according to one of claims 1 to 11, **characterised in that** the drum flange (12) has discharge openings (8) arranged distributed radially on the circumference.

13. Cable drum according to one of claims 1 to 12, **characterised in that** when the cable drum (1) is tilted and when the base frame (2) is resting on the assembly plane (29), due to the obliquely placed drum axis (42), the front drum flange (12) of the winding drum (10) supporting the plug socket inserts (13) is directed obliquely to a horizontal plane (assembly plane) so that raindrops acting on the drum flange (12) directed obliquely to the horizontal flow out through suitable discharge openings in the drum flange (12).

## Revendications

1. Tambour de câble (1) pour enrouler un câble électrique entre les flasques de tambour (11, 12) d'un tambour d'enroulement (10) sur le flasque de tambour avant (12) duquel sont disposées plusieurs prises rapportées (13) pour le branchement de fiches électriques, dans lequel le tambour d'enroulement (10) est monté à rotation avec un palier de rotation (42, 44, 45) sur une plaque de montage (18) qui est reliée à un socle (2) qui comporte un ou plusieurs pieds (5, 6), dans lequel le tambour d'enroulement (10) est monté à rotation sur un axe de tambour (42) incliné vers le haut en biais par rapport à l'horizontale (38) avec l'angle (37), de sorte que le flasque de tambour avant (12) du tambour d'enroulement (10) avec la poignée (14) disposée à cet endroit présente un plus grand écartement avec le sol par rapport à un plan de mise en place, **caractérisé en ce que** même avec un tambour de câble (1) couché avec le socle (2) sur un plan de mise en place (29), il existe une position inclinée des flasques (11, 12) du tambour de câble (1).

2. Tambour de câble selon la revendication 1, **caractérisé en ce que** l'angle (37) de l'axe de tambour (42) incliné vers le haut en biais par rapport à l'horizontale (38) est situé dans la plage entre 3 à 10° et est de préférence de 7°.

3. Tambour de câble selon la revendication 1 ou 2, **caractérisé en ce que** le plan des deux flasques de tambour (11, 12) du tambour de câble (1) est approximativement parallèle au plan de la plaque de montage (18) du socle (2).

4. Tambour de câble selon la revendication 3, **caractérisé en ce que** le plan de la plaque de montage (18) du socle (2) est lui aussi à peu près autant en biais que le plan des flasques (11, 12) du tambour de câble (1).

5. Tambour de câble selon l'une des revendications 1 à 4, **caractérisé en ce que** sur le côté arrière de la plaque de montage (18) du socle (2) est disposé un élément rapporté prolongé d'un support de socle (21), qui s'appuie sur le plan de mise en place (29) quand le tambour de câble est couché, et oriente le plan de la plaque de montage (18) en biais par rapport au plan de mise en place (29).

6. Tambour de câble selon la revendication 5, **caractérisé en ce que** le socle (2) se compose de deux pieds avant (5, 6), qui sont orientés vers l'avant à partir de la plaque de montage (18), et **en ce que** les deux pieds avant (5, 6) sont orientés vers l'avant en étant ouverts unilatéralement en une forme de U et forment entre eux un espace intermédiaire (7).

7. Tambour de câble selon l'une des revendications 1 à 6, **caractérisé en ce qu'**au moins dans la zone du flasque de tambour avant (12) du tambour d'enroulement (10) sont disposées des ouvertures d'écoulement (8) réparties sur la circonférence, qui traversent le flasque.

8. Tambour de câble selon l'une des revendications 1 à 7, **caractérisé en ce que** l'espace libre (41) produit par la position en biais du tambour d'enroulement (10), entre la circonférence du flasque de tambour avant (12) et le plan de mise en place (29), est situé dans la plage entre 5 à 8 cm.

9. Tambour de câble selon l'une des revendications 1 à 8, **caractérisé en ce que** la charge de palier du palier de rotation (42, 44, 45) pour le montage à rotation du tambour d'enroulement (10) est déplacée dans la direction (47) sur une surface de fixation (44) disposée au plus près de la plaque de montage arrière (18).

10. Tambour de câble selon l'une des revendications 1 à 9, **caractérisé en ce que** le corps d'enroulement (43) disposé entre les flasques (11, 12) du tambour d'enroulement (10) présente lui aussi la même position en biais que le tambour d'enroulement (10).

11. Tambour de câble selon l'une des revendications 5 à 10, **caractérisé en ce que** le support de socle (21) relie les deux pieds (5, 6) dans la zone arrière de la plaque de montage (18) et dépasse de la plaque de montage (18) suivant un écartement (3).

12. Tambour de câble selon l'une des revendications 1 à 11, **caractérisé en ce que** le flasque de tambour (12) comporte des ouvertures d'écoulement (8) disposées en étant réparties radialement sur la circonférence.

13. Tambour de câble selon l'une des revendications 1 à 12, **caractérisé en ce que** quand le tambour de câble (1) est renversé et le socle (2) posé sur le plan de mise en place (29), du fait de l'axe de tambour (42) en biais le flasque de tambour avant (12) du tambour d'enroulement (10) portant les prises rapportées (13) est dirigé en biais par rapport à un plan horizontal (plan de mise en place), de sorte que des gouttes de pluie agissant sur le flasque de tambour (12) dirigé en biais par rapport à l'horizontale s'écoulent à travers des ouvertures d'écoulement appropriées dans le flasque de tambour (12).
